(19) Europäisches Patentamt
European Patent Office
Office européen des brevets

(11) **EP 2 275 656 A2**

(12) **EUROPEAN PATENT APPLICATION**

(43) Date of publication:
**19.01.2011 Bulletin 2011/03**

(51) Int Cl.:
***F02C 7/18*** *(2006.01)*

(21) Application number: **10169017.0**

(22) Date of filing: **09.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **15.07.2009 GB 0912270**

(71) Applicant: **Rolls-Royce plc London SW1E 6AT (GB)**

(72) Inventors:
• **Chir, Adam Philip Derby, Derbyshire DE72 3RN (GB)**
• **Edwards, Huw Llewelyn Derby, Derbyshire DE21 2SD (GB)**

(74) Representative: **White, Kevin Andrew et al Rolls-Royce plc Intellectual Property Dept WH20 P.O. Box 3 Bristol South Goulcestershire BS34 7QE (GB)**

(54) **System for cooling cooling-air in a gas turbine engine**

(57)     A system for cooling cooling-air in a gas turbine engine, the system having an electricity generating fuel-cell, and an arrangement for receiving water produced by the fuel cell, delivering the water to the engine, and cooling cooling-air inside the engine using the water.

Figure 1

**Description**

The present invention relates to a system for cooling cooling-air in a gas turbine engine.

The high pressure turbine components of an aero gas turbine engine are located in the hottest part of the engine. At around 1600°C, the temperature of the gas stream is greater than the melting temperature of the nickel-based alloys from which the high pressure turbine nozzle guide vanes and rotor blades are typically cast.

It is usual, therefore, to cool nozzle guide vanes and rotor blades internally using cooling-air taken from the exit of the high pressure compressor. The cooling-air, which bypasses the combustor, may nonetheless be at a temperature of over 700°C. Nozzle guide vanes and rotor blades can also be cooled externally by passing the cooling-air through passages connecting the interior to the exterior of the respective component so that the cooling-air forms an air film around the component to protect it from the hot gas stream.

As the nozzle guide vanes are static components, they can be supplied with cooling-air by relatively straightforward ducting arrangements. Cooling-air is typically supplied to the rotor blades after passing through a preswirler which imparts a swirling motion to the cooling-air to match the rotation of the rotor disc. The swirling cooling-air impinges on the radially outer portion of the rotor disc to cool the disc, and enters internal cavities in the rotor blades via entrance holes in the root regions of the blades.

Although necessary to protect turbine components from the hot gas stream, the extraction of cooling-air from the compressor has an adverse effect on engine efficiency. Therefore, the cooling-air should be used as effectively as possible.

US patent no. 4254618 proposes bleeding cooling-air from the compressor discharge of a turbofan engine, and routing the cooling-air to a heat exchanger located in a diffuser section of the fan duct where the cooling-air is cooled by bypass air. The cooled cooling-air is then routed through compressor rear frame struts to an expander nozzle and thence to the turbine.

There is a continuing need to develop systems for cooling cooling-air in gas turbine engines.

According to a first aspect of the invention, there is provided a system for cooling cooling-air in a gas turbine engine, the system having an electricity generating fuel-cell, and an arrangement for receiving water produced by the fuel-cell, delivering the water to the engine, and cooling cooling-air inside the engine using the water.

Typically, the gas turbine engine is an aeroengine, and the fuel-cell is an auxiliary power unit of the aircraft. Since the fuel-cell can produce water on demand, it may not be necessary to carry a supply of water for cooling the cooling air for the entire duration of the flight. Thus, overall aircraft weight may not be adversely affected by adopting the system, while engine performance can benefit from the reduced use of cooling air or by enabling the engine thermal cycle to operate at a higher stator outlet temperature.

The system may have any one or any combination of the following optional features.

The arrangement may include one or more injectors for injecting the water delivered to the engine into the cooling-air. The or each injector may comprise a spray nozzle extending from a respective engine fuel injector.

Typically, the arrangement introduces the delivered water into a stream of cooling-air that is received from the compressor but bypasses the combustion chamber of the engine.

Alternatively, the arrangement may introduce the delivered water into the main gas path of the engine. Delivering water into the main gas path can help to reduce nitrogen oxide emissions from the engine. The arrangement may introduce the delivered water into the main gas path at the compressor exit.

The arrangement may include a heat exchanger, the water delivered to the engine passing through one side of the heat exchanger to cool the cooling-air which is passed through the other side of the heat exchanger. The heat exchanger can allow cooling-air cooling to take place in the event that the water delivered by the arrangement becomes contaminated, and so cannot be mixed into the cooling-air stream.

The arrangement may comprise a condenser for condensing water produced by the fuel-cell. The condenser can help to cool the produced water, providing more effective cooling of the cooling-air.

The arrangement may comprise a filter for filtering the water produced by the fuel-cell. The filter can facilitate direct injection of water into the cooling-air by helping to remove contaminants that would otherwise affect the engine. The fuel-cell may comprise a filter for filtering air entering the fuel-cell.

Typically, the arrangement comprises one or more pumps for pressurizing the water before it is delivered to the engine.

Preferably, the fuel-cell is a polymer electrolyte membrane fuel-cell. Polymer electrolyte membrane fuel-cells typically have a high power density and, if run on pure hydrogen, can produce water of sufficient quality to be directly injected into the cooling-air, thereby avoiding the need for a heat exchanger. Very high quality water is typically required as any contaminants can have an effect on the engine. Polymer electrolyte membrane fuel-cells can also produce water at comparatively low output temperatures (for example, 80°C), which can enhance the extent to which the cooling-air is cooled by the water.

The fuel cell may also be any other fuel cell that produces water at a relatively low temperature, for example a phosphoric acid fuel cell, where water is produced at around 180°C.

The fuel-cell may have a converter for converting kerosene to hydrogen fuel used by the fuel-cell. The converter may be used to convert engine fuel into fuel suitable for use by the fuel-cell so that a separate supply of e.g. hydrogen fuel does not have to be provided.

The arrangement may comprise a reservoir for storing water produced by the fuel-cell before the water is delivered to the engine.

The fuel-cell may be split into two or more smaller fuel-cells with separate fuel systems. Having a plurality of separate fuel-cells can help to ensure that no single fuel-cell failure can lead to the system losing its ability to deliver water to the engine.

Typically, the system will be incorporated with a gas turbine engine. Incorporating the fuel-cell with the gas turbine can allow the engine to operate with higher gas temperatures and/or use less cooling air. In this way engine fuel efficiency can be improved or the power available from an engine of a given size can be increased.

Thus, according to a second aspect of the present invention, there is provided a gas turbine engine having a system according to the first aspect of the invention, the system optionally having any one or combination of the optional features described above in relation to the first aspect.

When the system is fitted to a gas turbine engine, the cooled cooling-air may be used for internal cooling and/or external film cooling of turbine rotor blades and/or nozzle guide vanes.

When fitted to an engine, the fuel-cell may be an auxiliary power unit. The electricity produced by the fuel cell may be used to power electrical devices, such as those on board an aircraft, while the fuel cell continues to produce water for cooling the cooling-air inside the engine.

Typically, the gas turbine engine is an aeroengine. Indeed, a further aspect of the invention provides an aircraft powered by a gas turbine engine fitted with a system according to the first aspect (the system optionally having any one or combination of the optional features described above in relation to the first aspect).

Alternatively, the engine may be a land-based or marine gas turbine engine.

The fuel-cell can be used to increase the thrust and power produced by the gas turbine engine, as well as providing cooling to the cooling-air. For example, water produced by the fuel-cell may be injected upstream of the first compressor stage of the engine to increase the overall mass flow through the engine. The water can also have some partial intercooling effect during the first few stages of the compressor. Water produced by the fuel-cell may also be injected directly into the combustor. This can boost core power significantly. Effectively the core power goes up because there is more mass flow in the turbines than in the compressors.

Embodiments of the invention will now be described by way of example with reference to the accompanying drawings in which:

Figure 1 shows a polymer electrolyte membrane (PEM) fuel-cell suitable for use in the present invention; and

Figure 2 shows a schematic of a system for cooling cooling-air in a gas turbine engine on an aircraft according to an embodiment of the present invention.

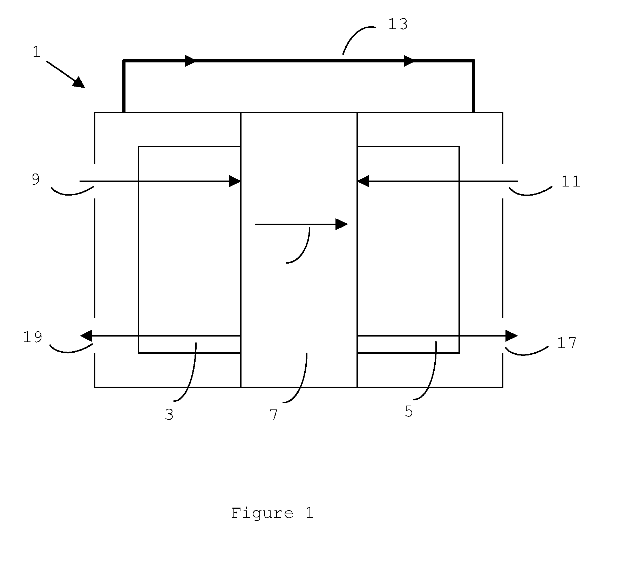

Figure 1 shows a polymer electrolyte membrane fuel-cell 1 suitable for use in the present invention. The fuel-cell has an anode 3 and a cathode 5 separated by a polymer membrane 7. Hydrogen $H_2$ is introduced into the cell through an input 9 on the anode side. Air is introduced into the cell through an input 11 on the cathode side. At the anode, an electrochemical reaction occurs in which the hydrogen dissociates into hydrogen ions and electrons. The hydrogen ions migrate through the membrane to the cathode, while the electrons are conducted through an external circuit 13 to the cathode. The flow of electrons through the external circuit provides a current which can be used to power electrical devices. At the cathode, an electrochemical reaction occurs in which oxygen from the air reacts with the hydrogen ions and the electrons to form water. The water flows out of the cell through an output 17. The cell also has an output 19 through which excess hydrogen fuel can be discharged. Water produced at the cathode typically has a temperature of 80°C and may be of high quality if pure hydrogen is used as fuel.

When used on an aircraft, the fuel-cell may form an auxiliary power unit, producing all or some of the electrical power for the electrical systems onboard. However, the fuel-cell need not be an auxiliary power unit. The system may use any onboard fuel-cell that produces water in large enough quantities.

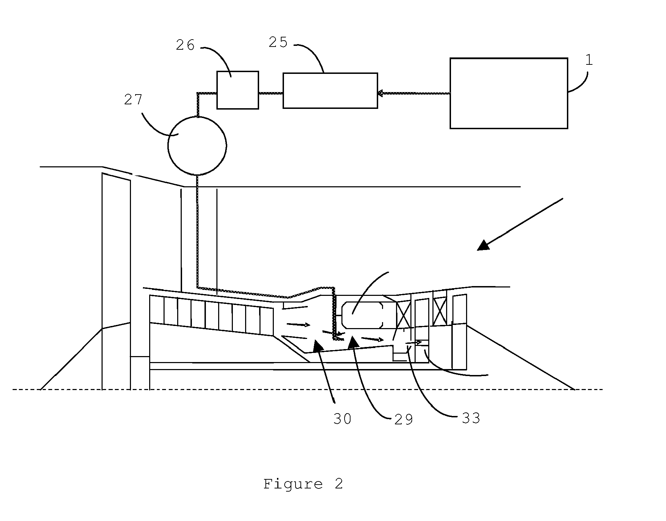

Figure 2 shows a schematic of a system for cooling cooling-air in a gas turbine engine 21 on board an aircraft according to an embodiment of the present invention. Water is supplied by a fuel-cell 1, such as that shown in Figure 1, and passes to a condenser 25 where the water is cooled. The water then passes from the condenser to one or more insulated storage tanks 26 installed in the aircraft fuselage. The storage tanks act as a reservoir for water that may be required to cool the cooling air later on. When a high thrust is selected by the pilot, low pressure pumps associated with the water tanks in the fuselage pump the water along a series of pipes installed in the aircraft wings to a high pressure pump 27 mounted on the engine. Water may also be taken directly from the condenser outlet to the high pressure pump allowing on-demand use of water to reduce cooling flow requirements.

The high pressure pump pressurizes the water to upwards of 1000 psi before the water is injected into a stream of cooling-air 29 by injector spray nozzles cantilevered from the fuel injectors 30. The stream of cooling-air passes from the compressor towards the high pressure turbine blades situated further towards the rear of the engine, bypassing the combustion chamber 31. As the water is injected it absorbs heat from the surrounding environment, causing the water to vaporise as its temperature rises. The total heat absorbed can be determined by considering latent heat and superheat of the resultant steam and can be controlled by modulating the flow of water. The axial flow of the cooled cooling-air results in its passing through the high pressure pre-swirl nozzles 33 to the high pressure turbine disc 35 where disc pumping feeds the high pressure turbine blades.

The following calculation shows approximately how much water a 440kW auxiliary power unit fuel-cell could produce:

Key Parameters:
Gravimetric Energy density of $H_2$, Ed = 120MJ/kg
Power, P = 440kW
Efficiency of fuel-cell, $\eta$ = 0.5

$$P = \dot{m} * \eta * Ed$$

$\dot{m} = 0.0073 kg/s$ - the mass flow of hydrogen if the power demand is 440kW.

Given the molecular masses of hydrogen, oxygen and water the mass of water produced can be calculated.

$$H_2 + 0.5O_2 = H_2O \quad \text{(mass balance equation)}$$
$$2 + 16 = 18$$

Therefore the mass flow of water produced is 9 times the rate at which hydrogen is consumed:

$$\dot{m} = 0.066 kg/s \text{ or 237 litres per hour}$$

Therefore in a 7-hour flight 1663.2 litres of water can be produced.

A long-range twin-engine large civil aircraft design might require 0.25kg/s of water for cooling-air cooling during take off and climb (or during an aborted landing). A typical climb to 10670 metres takes around 20 minutes. This equates to around 300 litres of water. Thus, the fuel-cell should meet the required demand for water.

During take off, water can also be used to provide extra thrust from the jet engines, e.g. by injecting the water upstream of the first compressor stage of the engine, and/or by injecting directly into the combustor. Water from the fuel-cell may be needed to replace the water used during take-off. Water will in general also be required to ensure that the aircraft can successfully abort a landing if necessary. Thus, typically, at some point during the flight water must be produced and stored for at least one aborted landing. However, when landed safely (and assuming no aborted landings), there should be enough water already in the storage tanks for the next take off.

If a landing is aborted, the pilot will either have to wait until more water is produced by the fuel-cell, (depending on the amount of fuel left) or will have to attempt a landing without the safety net of being able to abort again.

Given that both the jet fuel and the fuel for the fuel-cell are limited, the pilot will only be able to carry out a certain amount of aborted landings. The amount of jet fuel is especially important if the plane has to continue flying to generate the required water for another aborted landing. For example, if the amount of jet fuel is too low and does not provide enough time to generate enough water for an aborted landing, a landing may have to be attempted without the ability to abort. In an emergency unused drinking water could be rerouted to the engine.

To reduce the time spent circling after an aborted landing, the fuel-cell may, during the normal flight cycle, produce enough water for more than one aborted landing. Doing so can reduce the amount of jet fuel needed in an aborted landing scenario. For example, the fuel-cell may produce one and a half times the amount of water required for an aborted landing, reducing the circling time after an aborted landing from 1 hour to 30 minutes. Alternatively, the fuel-cell may be over-rated, so that in an emergency it can provide the required water in a shorter time.

Assuming the aircraft is reliant on the fuel-cell to provide water to allow for an aborted landing, the fuel-cell can be split into two smaller fuel-cells with separate fuel systems. Should one fuel-cell fail the second fuel-cell will then be able to produce the required water for cooling-air cooling. In the calculation above where a single 440kW fuel-cell is used, the fuel cell can produce enough water in one hour's flight to produce the required water. In the case where two smaller fuel-cells are used and one of the fuel-cells fails, the water can be produced in the last two hours of the flight.

As the demand for electricity onboard aircraft continues to increase, auxiliary power units having higher power ratings than 440kW may be required. Increasing the power rating of the fuel cells will in turn increase the rate at which water can be produced, thereby reducing the amount of time the aircraft is required to circle the runway in an aborted landing scenario.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

All references referred to above are incorporated by reference.

## Claims

1. A system for cooling cooling-air in a gas turbine engine (21), the system having:

    an electricity generating fuel-cell (1), and
    an arrangement for receiving water produced by the fuel cell (1), delivering the water to the engine (21), and cooling cooling-air inside the engine (21) using the water.

2. The system according to claim 1, wherein the arrangement includes one or more injectors for injecting the water delivered to the engine (21) into the cooling-air.

3. The system according to claim 1 or 2, wherein the arrangement introduces the delivered water into a stream (29) of cooling-air that is received from the compressor but bypasses the combustion chamber (31) of the engine (21).

4. The system according to claim 3 as dependent on claim 2, wherein the or each injector comprises a spray nozzle extending from a respective engine fuel injector (30).

5. The system according to claim 1 or 2, wherein the arrangement introduces the delivered water into the main gas path of the engine (21).

6. The system according to claim 1, wherein the arrangement includes a heat exchanger, the water delivered to the engine (21) passing through one side of the heat exchanger to cool the cooling-air which is passed through the other side of the heat exchanger.

7. The system according to any one of the preceding claims, wherein the arrangement comprises a condenser (25) for condensing the water produced by the fuel-cell (1).

8. The system according to any one of the preceding claims, wherein the arrangement comprises a filter for filtering the water produced by the fuel-cell (1).

9. The system according to any one of the preceding claims, wherein the arrangement comprises one or more pumps (27) for pressurizing the water before it is delivered to the engine (21).

10. The system according to any one of the preceding claims wherein the fuel-cell (1) is a polymer electrolyte membrane fuel-cell.

11. The system according to any one of the preceding claims, wherein the arrangement comprises a reservoir (26) for storing water produced by the fuel-cell before the water is delivered to the engine (21).

**12.** A gas turbine engine fitted with a system according to any one of the preceding claims.

**13.** A gas turbine engine according to claim 12, wherein the cooled cooling-air is used for internal cooling and/or external film cooling of turbine rotor blades (35) and/or nozzle guide vanes.

**14.** A gas turbine engine according to claim 12 or 13 which is an aeroengine.

**15.** A gas turbine engine according to claim 14, wherein the fuel-cell (1) is an auxiliary power unit of the aircraft).

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4254618 A